# EUROPEAN PATENT APPLICATION

(11) **EP 3 040 047 A1**
(43) Date of publication of application: **06.07.2016**
(21) Application number: 14840457.7
(22) Date of filing: 06.08.2014
(51) Int. Cl.: A61C 13/265, A61C 8/00, A61C 13/007

(54) **ATTACHMENT FOR PLATE DENTURE**

(30) Priority: 30.08.2013 JP 2013179729
(71) Applicant: GC Corporation, Bunkyo-ku Tokyo 113-0033 (JP)
(72) Inventor: WAKO, Yuichi, Tokyo 174-8585 (JP); SETO, Masaya, Tokyo 174-8585 (JP)
(74) Representative: Müller-Boré & Partner Patentanwälte PartG mbB
(86) International application number: PCT/JP2014/070737
(87) International publication number: WO 2015/029730

(57) **Abstract**

Provided is an attachment for a denture which is difficult to have a fault if external force due to attachment and the like is applied.

The attachment includes a convex element 10 that is a top structure of a natural tooth or an artificial tooth root 40 that is an anchor tooth, and a concave element 20 that is fixed to a position at a denture base 31, corresponding to the convex element. The convex element includes a fitting part 11, and a coupling part 12 that has a portion thinner than the fitting part and that couples the fitting part to the natural tooth or the artificial tooth root. The concave element includes a main body 21 of a tubular shape that has a bottom 21a at one end part thereof and an opening part 21b at another end part thereof, and in which a hollow portion 21c where the fitting part is inserted is formed, a groove 21e of an annular shape in an internal circumferential face of the main body in a direction of a circumference, an o-ring 22 whose outer circumferential portion is fit into the groove and whose inner diameter is smaller than the fitting part, and a discharge channel 21f that passes from the hollow portion through the groove, to communicate with an outside of the main body.

## Description

### Technical Field

This invention relates to an attachment for a denture which is used with components fit into each other: the components are one fixed as a top structure of a natural tooth or a dental implant fixture that is embedded under a jaw bone (hereinafter may be referred to as "an artificial tooth root"), which is an anchor tooth, and one arranged and fixed in a denture base side of a denture, and do not come out due to mastication and the like when attached although they are freely attached and detached.

### Background Art

Treatment is provided using dental prostheses (hereinafter may be simply referred to as "prostheses") instead of teeth lacked by odontectomy or the like in order to recover the force of mastication and fine views (aesthetics of dentition). Dentures are frequently used as prostheses.

Dentures are roughly classified into full dentures and partial dentures. Generally, a full denture (full false teeth) is applied to the case where there are no teeth on an alveolar ridge (maxilla or mandible) (edentulous jaw), and a partial denture is applied in the case where a false tooth is partially applied. Such a material is used for a denture base thereof as dental resin for bases (hereinafter may simply referred to as "resin") that is sold on the market as dental synthetic resin, or combination of resin and a dental alloy such as a dental titanium alloy.

Means for keeping a false tooth not coming out in mastication and the like in such a denture can be roughly classified into two types by difference in shape and mechanism of the means. One means is a clasp; in the case of a partial denture, natural teeth remaining in both sides of a tooth that was there and is lacked are cut to be abutment teeth, and clasps are made to grasp the abutment teeth by using elasticity of metal. The other means is an attachment for dentures (hereinafter may be simply referred to as "attachment"). For example, as described in Patent Literatures 1 to 4, such an attachment includes the combination of a convex element and a concave element as its component and is mainly used for full false teeth while used for a partial denture as well according to a case.

In a method of fixing this attachment, a remaining natural tooth is used as an abutment tooth in the case where a natural tooth (root of tooth) exists as an anchor tooth, and an artificial tooth root embedded under a jaw bone functions as an anchor tooth (abutment tooth) in the case of an edentulous jaw. One component that constitutes the attachment (for example, a convex element) is fixed as the top structure of the abutment tooth. The other component that constitutes the attachment (for example, a concave element) is fixed at a position of a denture base of a denture which faces one component. Their fitting supports and keeps a denture. Usually, a convex element is fixed inside an oral cavity, and a concave element is fixed to a denture base side.

### Citation List

### Patent Literature

Patent Literature 1: JP H6-319750A
Patent Literature 2: Japanese Translation of PCT International Application Publication No. JP-T-H10-509620
Patent Literature 3: Japanese Translation of PCT International Application Publication No. JP-T-2008-541858
Patent Literature 4: JP 2001-170081A

### Summary of Invention

### Technical Problem

Here, as ways of fitting a convex element and a concave element (joint), for example, the following structures are given; a structure regulated so that only reciprocation in one direction (an up-and-down motion in a vertical direction) is allowed like the combination of a cylinder and a piston; and a structure where a tip of a convex element is shaped to be a spheroid, and a concave element that is fit to the convex element is formed so that the spheroid does not come out thereof and is held thereby, to enable the concave element side to incline at a fixed point.

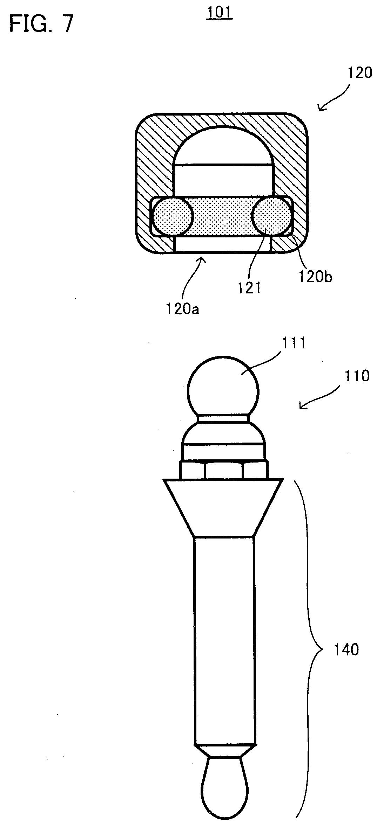

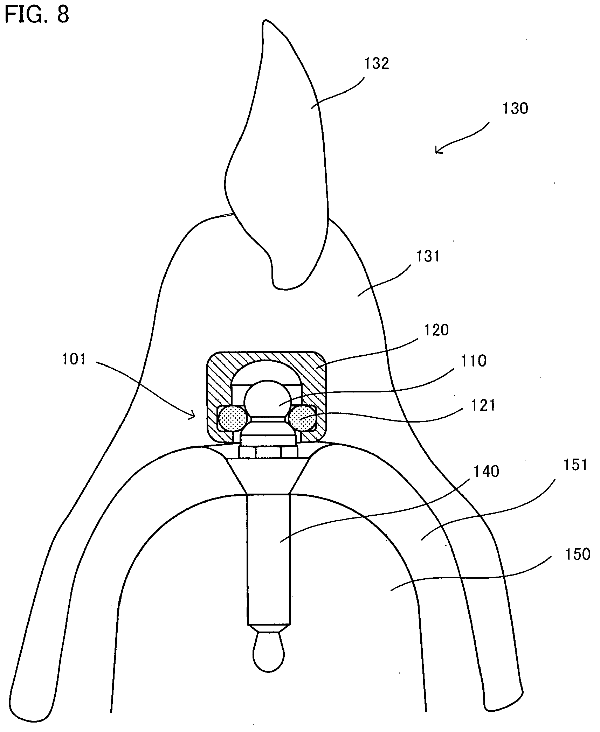

An attachment of the latter structure generally has the following structure. FIG. 7 is a view to explain structure of a convex element 110 and a concave element 120 of a conventional attachment 101. FIG. 8 is a view to explain structure of a denture 130 using the attachment 101.

The convex element 110 is a convex element that is fixed as the top structure of an artificial tooth root 140. The convex element 110 has a spheroid 111 at its tip. In contrast, the concave element 120 is an element of an almost cylindrical shape with a bottom in one end. The concave element 120 is fixed to a denture base of a denture. Thus, a space 120a is formed inside the concave element 120. This space 120a has such a size that the spheroid 111 of the convex element 110 can be inserted thereinto. A groove 120b is formed along an end part of the tubular internal circumference with the bottom, of the concave element 120 which is in a side without a bottom. An o-ring 121 is fit into the groove 120b. The inner diameter of this o-ring 121 is smaller than the diameter of the spheroid 111 of the convex element 110.

The attachment 101 like the above is installed as FIG. 8. That is, the attachment 101 is arranged so that the artificial tooth root 140 is embedded under a jaw bone 150 and the convex element 110 protrudes from the jaw bone 150 and a gum 151. On the other hand, the concave element 120 is embedded under a denture base 131 where an artificial tooth 132 is disposed. The spheroid 111 of the convex element 110 is inserted into the space 120a that is formed in the concave element 120, and both are fit into each other. At this time, the spheroid 111 is caught by the o-ring 121, and held so as not to come out of the space 120a since the o-ring 121 of the inner diameter smaller than the diameter of the spheroid 111 is included in the concave element 120.

The attachment 101 of such a structure has a fault of separating the convex element 110 and the concave element 120 due to removal of the o-ring 121 from the groove 120b when external force is applied in attachment, mastication, and the like.

An object of the present invention is to provide an attachment for a denture which is difficult to have a fault if external force due to attachment, mastication and the like is applied.

### Solution to Problem

The inventors got knowledge that liquid such as saliva and washing water enters a gap between the convex element and the concave element of the attachment of the above described structure, relating to its structure and an environment where it is used. They found out such a problem arises that: if the attachment is attached or mastication is carried out in a state where liquid enters the gap, elasticity expected when the attachment was designed is not obtained because of liquid when pressure from attaching or the like is applied; and a tooth root that is an anchor tooth is heavily loaded down. The present invention was made with obtained knowledge that raised pressure makes the o-ring come out.

The present invention will be described below. Here, reference signs attached to the drawings are described together in parentheses for easy understanding. However, the present invention is not limited thereto.

The invention of claim 1 is an attachment for a denture (1) including a convex element (10) that is fixed as a top structure of a natural tooth or a dental implant fixture (40), the natural tooth and the dental implant fixture being anchor teeth, and a concave element (20) that is fixed to a position at a denture base (31) of a denture (30), the position corresponding to the convex element, wherein the convex element includes a fitting part (11), and a coupling part (12) that has a portion formed thinner than the fitting part, and that couples the fitting part to the natural tooth or the dental implant fixture, and the concave element includes a main body (21) of a tubular shape, the main body having a bottom (21 a) at one end part thereof and an opening part (21 b) at another end part thereof, in the main body a hollow portion (21c) where the fitting part is inserted being formed, a groove (21 e) of an annular shape that is provided for an internal circumferential face of the main body of the tubular shape in a direction of a circumference, an o-ring (22) whose outer circumferential portion is fit into the groove, the o-ring being arranged along the groove, and whose inner diameter is smaller than the fitting part, and a discharge channel (21f, 21 g) that passes from the hollow portion between the bottom and the o-ring, through the groove, to communicate with an outside of the main body.

According to the invention of claim 2, in the attachment for a denture (1) according to claim 1, a plurality of the discharge channels (21f, 21g) are included.

According to the invention of claim 3, in the attachment for a denture (1) according to claim 1 or 2, the discharge channel (21f, 21 g) is a slit (21f) that is provided for the main body (21), the slit extending in a direction orthogonal to a direction where the o-ring (22) takes the annular shape.

### Advantageous Effects of Invention

According to the present invention, an attachment for a denture which can quickly discharge liquid entering the inside of a hollow portion of the concave element, and which is difficult to have a fault even if external force by attachment and the like is applied can be given.

### Brief Description of Drawings

FIG. 1 is an external view depicting structure of an attachment for a denture 1 separately.
FIG. 2 is an external perspective view of a concave element 20.
FIG. 3(a) is a view of the concave element 20 seen from an arrow IIIa of FIG. 1, and FIG. 3(b) is a cross sectional view of the concave element 20 taken along IIIb-IIIb indicated in FIG. 3(a).
FIG. 4 is a view to explain structure of a convex element 10 and the concave element 20 in a scene where they are fit into each other.
FIG. 5 is a view to explain an example of applying the attachment for a denture 1 to a denture 30.
FIG. 6 is a view to explain a concave element 20'.
FIG. 7 is an external view depicting structure of the conventional attachment for a denture 101 separately.
FIG. 8 is a view to explain an example of applying the conventional attachment for a denture 101 to the denture 130.

### Description of Embodiments

The present invention will be described below based on the embodiments depicted in the drawings. The present invention is not limited to these embodiments.

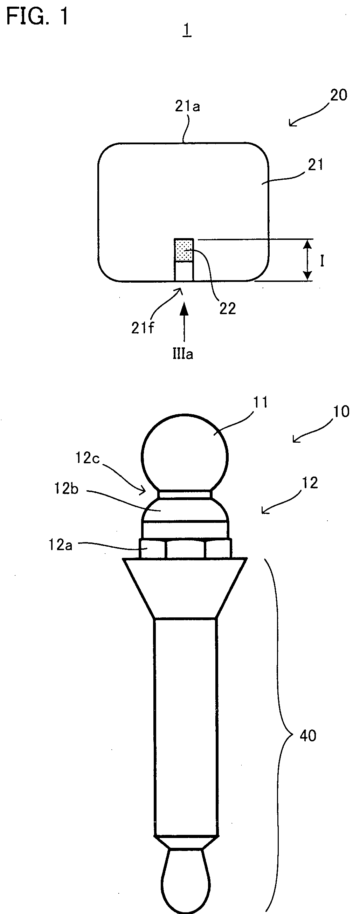

FIG. 1 depicts an exterior of the attachment for a denture 1 according to one embodiment. FIG. 1 depicts a state where the convex element 10 and the concave element 20 are separated from each other. As is seen from FIG. 1, the attachment 1 is made having the convex element 10 and the concave element 20.

The convex element 10 is a convex element that is fixed as the top structure of a natural tooth or an artificial tooth root. In this embodiment, the convex element 10 is continuously arranged from the top of an artificial tooth root 40. The artificial tooth root 40 applied here is not especially limited, and a known artificial tooth root can be used.

The convex element 10 has a fitting part at an end part that is in the opposite side to the end part fixed to the artificial tooth root 40. In this embodiment, the fitting part is formed by a spheroid 11 that has at least part of a sphere. The artificial tooth root 40 and the spheroid 11 are coupled with each other by a coupling part 12.

In this embodiment, the coupling part 12 has a fixing part 12a that is fixed to an end part of the artificial tooth root 40 and a neck 12b that continues from the fixing part 12a. The spheroid 11 is continuously arranged from an end part of the neck 12b which is in the opposite side to the fixing part 12a.

Here, it is preferable that the the neck 12b has a form of being thinner than the diameter of the spheroid 11 at least at its coupling part with the spheroid 11. Whereby, a concave narrow part 12c is formed at the bottom part of the spheroid 11 as appearing in FIG. 1. As described later, an o-ring 22 of the concave element 20 is engaged with the narrow part 12c.

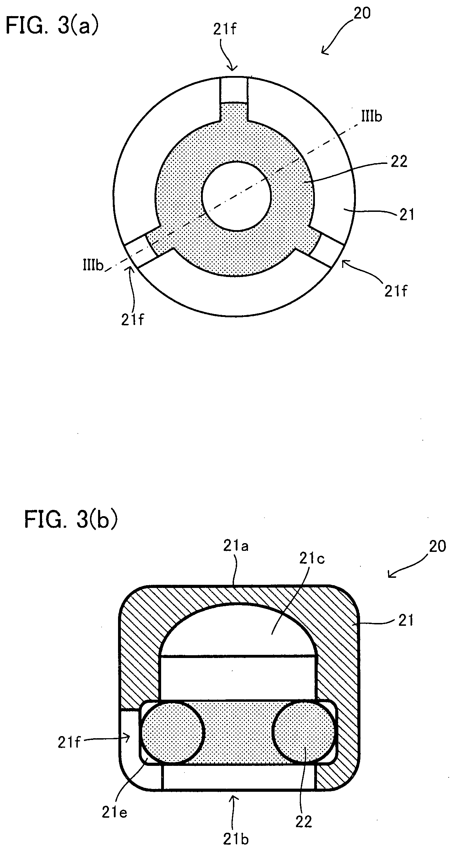

The spheroid 11 has such a size as to be possible to be inserted into a hollow portion 21c of the concave element 20 described below (see FIG. 3), and has a diameter larger than the inner diameter of the o-ring 22 provided for the concave element 20 (see FIG. 3).

As described later, the fitting part may be any shape as long as being accommodated in the hollow portion 21c of the concave element 20, and being able to be held by the o-ring 22.

When the convex element 10 is fixed as the top structure of the artificial tooth root 40, either the fixing part 12a of the coupling part 12 of the convex element 10 and the artificial tooth root 40 may be integrally shaped, or the convex element 10 and the artificial tooth root 40 may be separately prepared, to be fixed to each other with a screw. In this embodiment, the convex element 10, that is, the fixing part 12a and the artificial tooth root 40 are integrally shaped. Part of the outer circumference of the fixing part 12a is shaped to be a hexagon in order to be fit to a embedding device that is used when the artificial tooth root 40 is embedded.

In this embodiment, an example of arranging the artificial tooth root 40 to the convex element 10 is presented. The present invention is not limited to this, and it is possible to fix the convex element 10 to a natural tooth. In the case of fixing to a natural tooth, wax-up is carried out by means of a common method, and a metal body that can be applied to a root canal that is in a natural tooth where root canal preparation is carried out is made and thus the convex element 10 is fixed. While the convex element 10 may be formed by wax-up, such a method is easy and accurate that the convex element 10, which is made by stainless steel or the like in advance separately, is welded to a metal body.

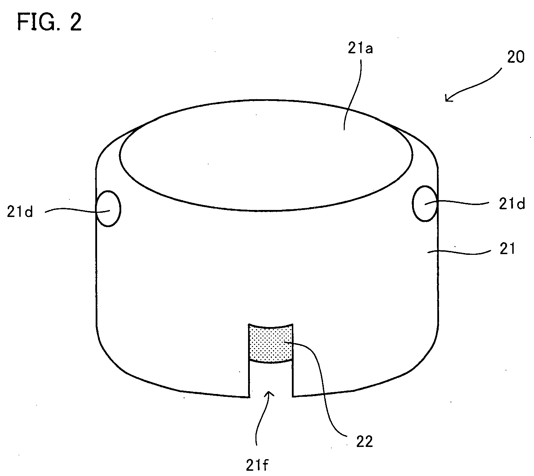

The concave element 20 is a concave element that is fixed to a position corresponding to the above convex element 10, at the denture base of the denture. FIG. 1 illustrates one external view of the concave element 20. FIG. 2 is an external perspective view of the concave element 20, FIG. 3(a) is a view of the concave element 20 seen from the convex element 10 side (that is, in the direction indicated by the arrow IIIa in FIG. 1), and FIG. 3(b) is a cross sectional view of the concave element 20 taken along the line IIIb-IIIb indicated in FIG. 3(a).

As is seen from these drawings, the concave element 20 is made having a main body 21 and the o-ring 22.

The main body 21 has a cylindrical shape with a bottom. The main body 21 has a bottom 21 a at one end part, and an opening part 21b at another end part. Therefore, the hollow portion 21c is formed inside the cylindrical shape. The inside and outside of the hollow portion 21c communicate via the opening part 21b.

The opening part 21b has such a size that the above spheroid 11 and the coupling part 12 of the convex element 10 can pass therethrough. The hollow portion 21c is formed so that the spheroid 11 is accommodated thereinside. As described later, a gap is formed between the spheroid 11 and the bottom 21 a under a state where the spheroid 11 is accommodated in the hollow portion 21 c.

It is preferable that in an outer face of the main body 21, concavities 21d for improving adhesion to resin is formed (see FIG. 2).

An annular groove 21 e is provided for an internal circumferential face of the main body 21 along the internal circumferential face. An outer circumference side of the o-ring 22 is arranged in this groove 21e as described below. Thus, in this embodiment, the groove width of the groove 21e (size of the groove 21e that is along the direction where the cylindrical axis of the main body 21 extends) is approximately same as the diameter of a wire material that forms the o-ring 22. On the other hand, the depth of the groove 21e (size of the main body 21 in the direction of its diameter of the cylinder) is smaller than the diameter of the wire material that forms the o-ring 22.

Further, slits 21f are provided for an end part that is in the side of the opening part 21b of the main body 21. Each slit 21f functions as a discharge channel by which the hollow portion 21c communicates with the outside via the groove 21e. While a size of each slit 21f in the extending direction (size represented by I in FIG. 1) is not especially limited, it is preferable that each slit 21f extends from the end face of the main body 21 in the side of the opening part 21b to or to above the middle of the groove 21e in the width direction. That is, it is preferable that when the o-ring 22 is arranged in the groove 21e, the slits 21f extend so as to be orthogonal to the direction where the wire material of the o-ring 22 extends, and reach the position above the top of the outer diameter portion of the o-ring 22 (largest outer diameter portion). Whereby, water entering the hollow portion 21c can be smoothly discharged.

The width of each slit 21f (width in crosswise direction of the paper for FIG. 1) is not especially limited. The width can be adjusted accordingly in view of the performance of discharging water, the strength of the concave element 20, and so on.

In this embodiment, three slits 21 f are provided at regular intervals along the circumference direction of the main body 21. Thus, the slits 21f are arranged at intervals of 120°, using the axis of the tubular main body 21 as the center. It is noted that the number of the slits 21f is not especially limited in this invention, and at least one slit have to be provided.

The o-ring 22 is a member of a wire material that is made of an elastic member, to be made to be an annular shape as well as known o-rings. The outer diameter of the o-ring 22 is preferably approximately same as an annular diameter that the bottom portion of the above groove 21 e forms. The inner diameter of the o-ring 22 is formed smaller than the diameter of the spheroid 11 (size of the fitting part) of the convex element 10.

As described above, the wire diameter of the wire material of the o-ring 22 is approximately same as the width of the groove 21 e, and larger than the depth of the groove 21e.

The o-ring 22 is arranged inside the groove 21e of the main body 21 which has the above described form. Whereby, as depicted in FIGS. 3(a) and 3(b), the inner diameter portion of the o-ring 22 narrows the insertion opening to the hollow portion 21c.

As is seen from FIG. 3(b), a tubular wall surface of the main body 21, corresponding to the portions where the slits 21f are provided, is removed (notched), and the hollow portion 21c and the outside communicate via the groove 21 e.

It is preferable that the convex element 10 and the concave element 20 except the o-ring 22 are made of metal such as stainless steel, titanium and titanium alloy in view of the strength, biocompatibility, rust-prevention, etc.

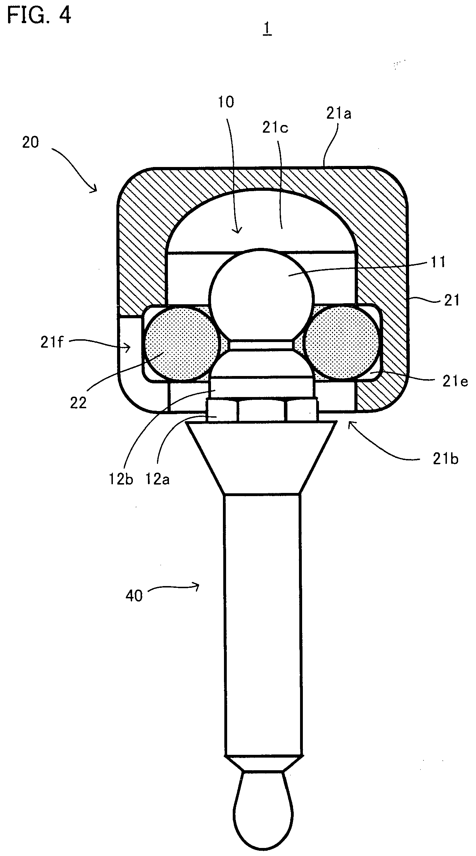

The above described convex element 10 and concave element 20 are combined as follows. FIG. 4 depicts a state where the convex element 10 and the concave element 20 are fit into each other. In this drawing, the view represented in FIG. 1 is used for the convex element 10 and the view represented in FIG. 3(b) is used for the concave element 20.

As is seen from FIG. 4, the spheroid 11 of the convex element 10 is inserted into the hollow portion 21 c of the concave element 20 and whereby, both are combined. At this time, because the inner diameter of the o-ring 22 is formed smaller than the diameter of the spheroid 11 of the convex element 10, the spheroid 11 is engaged with the o-ring 22 by arrangement of the o-ring 22 around the narrow part 12c, which is formed at the coupling portion of the spheroid 11 and the neck 12b as is represented in FIG. 4. Whereby, the convex element 10 is fit into the concave element 20, to be held.

Such fitting can be carried out by insertion of the spheroid 11 in the side of the opening part 21b of the concave element 20 into the hollow portion 21c with the o-ring 22 elastically deformed by application of a little strong force.

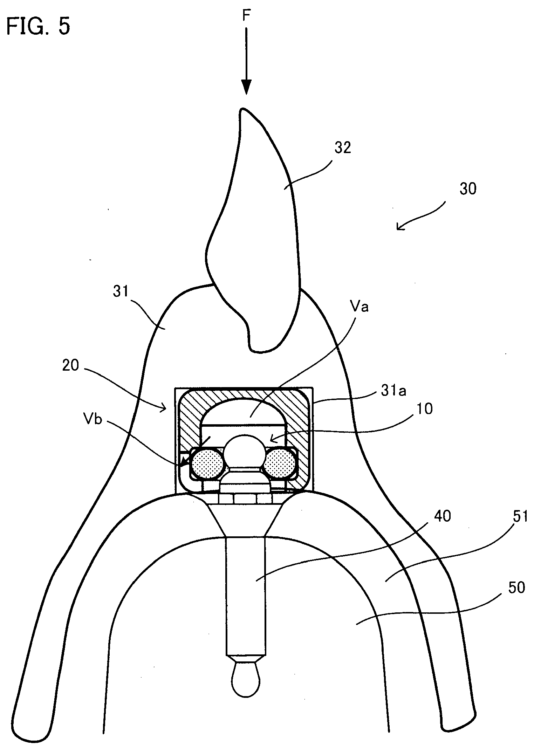

An example where the attachment 1 is applied to a denture will be described. FIG. 5 is a view for the explanation.

The convex element 10 is fixed to the artificial tooth root 40 that is vertically implanted in the jaw bone 50. The concave element 20 is arranged at a position of the denture base 31, which is made of resin, of the denture 30 including an artificial tooth 32, corresponding to the convex element 10. The concave element 20 arranged in the denture base 31 such that: when or after the denture 30 is formed, a concave part 31a is formed in the denture base 31, and the concave element 20 is inserted in the concave pert 31 a, to be fixed. Then, as described above, the convex element 10 and the concave element 20 are fit into each other, to arrange the denture 30 in an oral cavity. The following are more details.

The denture base 31, which is made by means of a known method, is prepared. In addition, as needed, the plural artificial tooth roots 40 to which the convex elements 10 are attached are embedded under a patient's oral cavity in advance. Whereby, the inside of the oral cavity is ready to attach the denture base 31.

On the other hand, positions of the artificial tooth roots 40, which are embedded under the oral cavity, are copied on a surface of the denture base 31 that corresponds to the oral mucosa. A method for copying is not especially limited. For example, marking is carried out on the peak of each spheroid 11 of the convex element 10 that is fixed to the artificial tooth root 40, and the denture base 31 is pushed against the spheroid 11 to be able to copy the position. Alternatively, a soft impression material is applied to a side of the denture base 31 which is in the inner surface side of the oral cavity, to be put onto the oral cavity. Whereby a position of the spheroid 11 can be copied on the surface of the impression material.

The concave part 31 a that is larger than the concave element 20 is formed with a dental cutting instrument at a position which is recorded on the denture base 31 according to the above, and corresponds to the convex element 10. At this time, it is preferable that a communicating hole that is not depicted and via which the inside of the concave part 31a communicates with the outside is provided in order to remove excess quick cure resin that is excess of quick cure resin used for bonding as described below.

The corresponding concave element 20 is covered over the convex element 10 that is fixed to the artificial tooth root 40 embedded under the oral cavity and that protrudes from the jaw bone 50 and a gum 51, and both are fit into each other as described above. At this time, as needed, an undercut portion that exists in the fitting part of the convex element 10 and/or the concave element 20 may be embedded with a silicone material or a rubber dam. After that, for example, quick cure resin for bonding and fixing the concave element 20 is poured into the the concave part 31a that is formed in the denture base 31. On the other hand, quick cure resin or the like is also heaped on the concave element 20 with which the convex element 10 under the state where its undercut is embedded in the oral cavity is covered. If the denture base 31 is attached to the inside of the oral cavity in this state, the denture 30 can be attached to a proper position in the oral cavity. At the same time, the concave element 20 is fixed to a proper position at the denture base 31.

The denture 30 including the attachment 1 as the above effects the following. That is, due to the use of the denture 30 and its characteristics, liquid enters a space Va that is inside the hollow portion 21c of the concave element 20 and that is surrounded by the bottom 21 a, the spheroid 11 and the o-ring 22. If force as represented by the arrow F in FIG. 5 is applied to the denture 30 due to attaching, mastication or the like under the state where liquid enters, force compressing the space Va works. On the contrary, according to the attachment 1 of this embodiment, the hollow portion 21c communicates with the outside via the groove 21e by means of the slits 21f even if the space Va is compressed. Thus, as represented by the arrow Vb in FIG. 5, liquid can be discharged by means of the slits 21f.

Therefore, it can be prevented that liquid entering the space Va prevents elastic deformation expected when the attachment was designed, due to compression of the space Va; and the artificial tooth roots that are anchor teeth are heavily loaded down. It becomes possible to solve the problem of o-ring's coming out due to raised pressure.

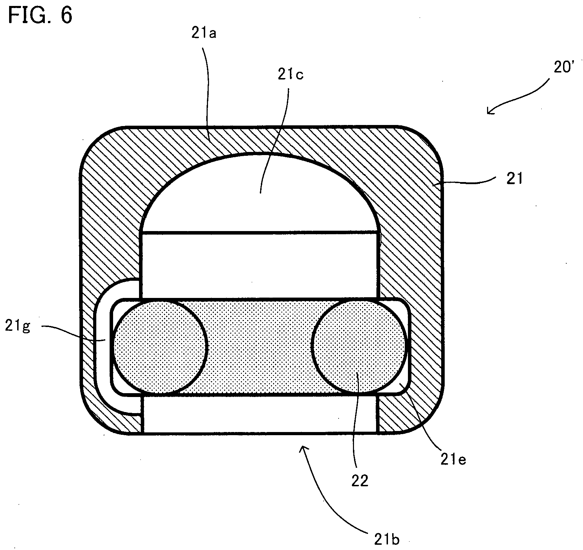

FIG. 6 is a view to explain another embodiment. FIG. 6 is a view corresponding to FIG. 3(b), and a view to explain the structure of a concave element 20'. The concave element 20' has the same portions as the above described concave element 20 except that its form is different from the concave element 20 only in discharge channel. The convex element 10 is the same as well. Thus, a discharge channel of the concave element 20' is described here.

As is seen from FIG. 6, a discharge groove 21 g is provided for a discharge channel of the concave element 20' instead of the slits 21 f of the concave element 20. Part of the bottom of the groove 21e for arrangement of the o-ring 22 (same portion as where the slits 21f are provided) is dug, to form a groove thereat. The discharge groove 21g is the groove by which the hollow portion 21c communicates with the outside.

The discharge groove 21g, which is a discharge channel like the above, also forms a discharge channel by which the hollow portion 21c communicates with the outside via the groove 21 e, and works as well as the above described slits 21f as discharge channels.

### Reference Sings List

- 1: attachment for a denture

- 10: convex element
- 11: spheroid (fitting part)
- 12: coupling part
- 12a: fixing part
- 12b: neck
- 12c: narrow part
- 20, 20': concave element
- 21: main body
- 21: bottom
- 21b: opening part
- 21c: hollow portion
- 21d: concavity
- 21e: groove
- 21f: slits (discharge channels)
- 21g: discharge groove (discharge channel)
- 30: denture
- 31: denture base
- 32: artificial tooth
- 40: artificial tooth root (dental implant fixture)

## Claims

1. An attachment for a denture comprising:
a convex element that is fixed as a top structure of a natural tooth or a dental implant fixture, the natural tooth and the dental implant fixture being anchor teeth; and
a concave element that is fixed to a position at a denture base of a denture, the position corresponding to the convex element,
wherein the convex element includes:
a fitting part; and
a coupling part that has a portion formed thinner than the fitting part, and that couples the fitting part to the natural tooth or the dental implant fixture, and
the concave element includes:
a main body of a tubular shape, the main body having a bottom at one end part thereof and an opening part at another end part thereof, in the main body a hollow portion where the fitting part is inserted being formed,
a groove of an annular shape that is provided for an internal circumferential face of the main body of the tubular shape in a direction of a circumference,
an o-ring whose outer circumferential portion is fit into the groove, the o-ring being arranged along the groove, and whose inner diameter is smaller than the fitting part, and
a discharge channel that passes from the hollow portion between the bottom and the o-ring, through the groove, to communicate with an outside of the main body.

2. The attachment for a denture according to claim 1, wherein a plurality of the discharge channels are included.

3. The attachment for a denture according to claim 1 or 2,
wherein the discharge channel is a slit that is provided for the main body, the slit extending in a direction orthogonal to a direction where the o-ring takes the annular shape.
